# EUROPEAN PATENT SPECIFICATION

(11) **EP 1 925 931 B1**
(45) Date of publication and mention of the grant of the patent: **19.05.2010**
(21) Application number: 07116136.8
(22) Date of filing: 11.09.2007
(51) Int. Cl.: G01N 21/90, B07C 5/34

(54) **Machine for inspecting glass containers**
Maschine zur Überprüfung von Glasbehältern
Machine pour inspecter des conteneurs de verre

(30) Priority: 23.10.2006 US 585366
(43) Date of publication of application: 28.05.2008
(73) Proprietor: Emhart Glass S.A., 6330 Cham (CH)
(72) Inventor: Diehr, Richard D., Horseheads, NY 14845 (US)
(74) Representative: Warren, Anthony Robert

(56) References cited:
- DE-A1- 10 065 290
- DE-C1- 19 920 007
- US-A- 4 435 641
- US-A- 4 682 023
- US-A- 6 122 048

## Description

The present invention relates to machines which inspect the sealing surface of a glass container for a "wire edge".

In the formation of a glass bottle, a gob of molten glass is first formed into a "parison" and then the parison is formed into a bottle. The parison may be formed in a pressing process where a plunger is advanced into a blank mold containing the gob to forcefully fill the space between the fully advanced plunger and the mold with molten glass. It is possible in this process to apply too much force which may result in a very slight opening of the mold segments with a very thin sliver of molten glass being pushed into this separation. This sliver extends upwardly from the inner edge of the bottle opening at the sealing surface of the bottle and is very undesirable.

The present invention is directed to a machine for inspecting a glass container, generally of the type disclosed in DE-A1-10065291, and comprising means for vertically supporting the glass container at an inspection station, a first light source for directing light vertically upwardly through the bottom of the glass container, camera means, located vertically above the sealing surface, for imaging the sealing surface of the glass container, a beam splitter located above the sealing surface, and a second light source for directing light horizontally towards said beam splitter for redirecting the horizontally directed light vertically downwardly toward the sealing surface.

The apparatus disclosed in the latter DE-A1 includes installations in the inspection station for at least two inspection steps which occur at different points in time as the bottle moves through the inspection station. One light source illuminates the bottom of the bottle during one inspection step, and another light source illuminates the sealing surface of the bottle during another inspection step. Each light source is illuminated and extinguished in succession. The apparatus is intended to detect chips, etc in the sealing surface of the container, and could not detect a "wire edge" in the bottle opening or mouth.

It is an object of the present invention to provide an apparatus for inspecting glass containers which can detect wire edges.

According to the present invention, there is provided a machine as defined in the characterizing clause of claim 1, which is operable to inspect for the presence of a wire edge protruding upwardly from the inner edge of an annular step defined in the interior corner of the sealing surface hole of a glass container when operatively located at an inspection station, the camera means including a field lens located above the sealing surface of the glass container, with the beam splitter being located between the field lens and the sealing surface, and the machine being configured to direct the light from the first light source vertically upwardly through the bottom of the container, and simultaneously to direct the light from the second light source, via the beam splitter, vertically downwardly toward the sealing surface, whereby in operation of the machine the hole will appear bright, the sealing surface will appear gray, the annular step will appear black and a wire edge will appear gray.

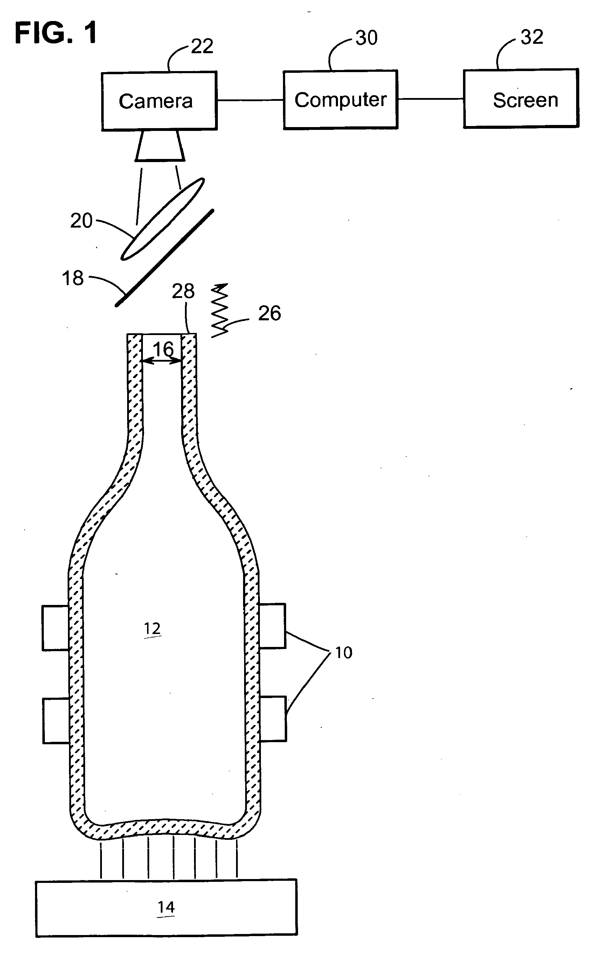

Reference will now be made to the accompanying drawings which illustrate a presently preferred embodiment incorporating the principles of the invention, and in which:-
Figure 1 is an elevational view of a glass inspection machine for inspecting for wire edges made in accordance with the teachings of the present invention;
Figure 2 is a view of the top surface of a bottle as imaged by the camera shown in Figure 1;
Figure 3 is cross sectional view through the finish portion of the glass bottle; and
Figure 4 is a view similar to Figure 2 showing the presence of a wire edge.

The inspection machine has a belt type conveyor made up of opposed pairs of belts 10 which feed a glass container, such as a bottle 12, to the disclosed inspection station. Beneath the glass bottle is a light source 14 which directs light axially through the bottle. The light passes through the bore 16 of the glass bottle, through a beam splitter 18, through a field lens 20 and into a camera 22, where the light will be imaged on the camera matrix. The image will be transferred to a computer 30 where it will be evaluated and a picture of the image will be displayed on a screen 32. A vertically oriented LED panel 26 directs light horizontally to the beam splitter 18 which reflects a portion of the light vertically, axially, downwardly at the top (sealing surface) 28 of the glass bottle.

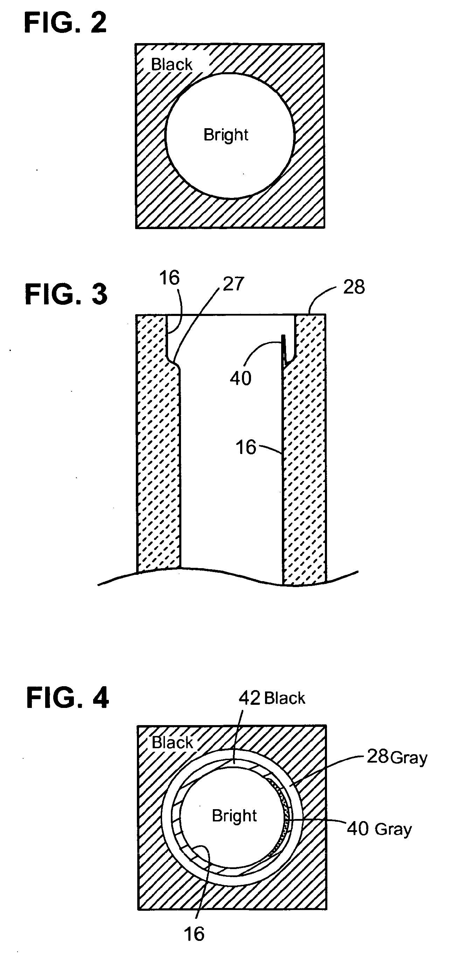

Figure 2 is an image of the top of the glass bottle when the LED light source is turned off. The vertical hole in the finish of the glass bottle appears bright (white) while the rest of the image is black.

Figure 3 shows the top of a bottle which has a flat sealing surface 28 and a very small inside step 27 which is slightly inclined (for purposes of clarity, this step is shown much larger than it would be). Projecting vertically upwardly is a "wire edge" 40 which can extend along a portion of the interior edge of the step. A wire edge is very undesirable since it may break off.

Figure 4 shows an image of the top of the glass bottle shown in Figure 3 with the bottom 14 and LED 26 light sources "on". The hole in the finish continues to be bright or white. Enough light reflects upwardly from the sealing surface 28 to make the sealing surface appear gray. The annular Black area 42 between the Gray and Bright areas defines the annular step 27 with the wire edge 40 appearing Gray. The wire edge is highlighted and the lighting defines a well-defined annular black ring 42 in which a wire edge will be located.

## Claims

1. A machine for inspecting a glass container, comprising
means (10) for vertically supporting the glass container (12) at an inspection station,
a first light source (14) for directing light vertically upwardly through the bottom of the glass container,
camera means (22), located vertically above the sealing surface (28), of the glass container,for imaging the sealing surface,
a beam splitter (18) located above the sealing surface (28), and
a second light source (26) for directing light horizontally towards said beam splitter (18) for redirecting the horizontally directed light vertically downwardly toward the sealing surface (28)
**characterized in that**
the machine is operable to inspect for the presence of a wire edge (40) protruding upwardly from the inner edge of an annular step (27) defined in the interior corner of the sealing surface hole (16) of a glass container (12) when operatively located at an inspection station,
the camera means (22) includes a field lens (20) located above the sealing surface (28) of the glass container, the beam splitter (18) being located between the field lens and the sealing surface, and
the machine is configured to direct the light from the first light source (14) vertically upwardly through the bottom of the container, and simultaneously to direct the light from the second light source (26), via the beam splitter (18), vertically downwardly toward the sealing surface (28),
whereby in operation of the machine the hole will appear bright, the sealing surface will appear gray, the annular step will appear black and a wire edge will appear gray.

2. A machine for inspecting for the presence of a wire edge according to claim 1, wherein said second light source is a panel of LED's.

3. A machine for inspecting for the presence of a wire edge according to claim 1 or 2, wherein said camera means includes a CCD camera.

## Patentansprüche

1. Maschine zur Inspektion von einem Glasbehälter, mit
Mitteln (10) zum vertikalen Stützen des Glasbehälters (12) an einer Prüfstation,
einer ersten Lichtquelle (14), um Licht vertikal nach oben durch die Unterseite des Glasbehälters zu richten,
Kameramitteln (22), die vertikal über der Dichtfläche (28) des Glasbehälters angeordnet sind, um die Dichtfläche abzubilden,
einem Strahlteiler (18), der über der Dichtfläche (28) angeordnet ist, und mit
einer zweiten Lichtquelle (26), um Licht horizontal in Richtung des Strahlteilers (18) zu richten, um das horizontal gerichtete Licht vertikal nach unten in Richtung der Dichtfläche (28) abzulenken,
**dadurch gekennzeichnet, dass**
die Maschine betreibbar ist, das Vorhandensein eines Drahtgrats (40) zu prüfen, der von dem inneren Rand einer ringförmigen Stufe (27) nach oben hervorsteht, die in der inneren Ecke der Dichtflächenöffnung (16) des Glasbehälters (12) definiert ist, wenn sich dieser operativ an einer Prüfstation befindet,
die Kameramittel (22) eine Feldlinse (20) umfassen, die oberhalb der Dichtfläche (28) des Glasbehälters angeordnet ist, wobei der Strahlteiler (18) zwischen der Feldlinse und der Dichtfläche angeordnet ist, und
die Maschine ausgebildet ist, Licht von der ersten Lichtquelle (14) vertikal nach oben hin durch die Unterseite des Behälters zu richten und gleichzeitig Licht von der zweiten Lichtquelle (26) über den Strahlteiler (18) vertikal nach unten in Richtung der Dichtfläche (28) zu richten,
wodurch die Öffnung beim Betrieb der Maschine hell, die Dichtfläche grau, die ringförmige Stufe schwarz und der Drahtgrat grau erscheinen wird.

2. Maschine zum Prüfen des Vorhandenseins eines Drahtgrats nach Anspruch 1, bei der die zweite Lichtquelle ein Paneel von LEDs ist.

3. Maschine zum Prüfen des Vorhandenseins eines Drahtgrats nach Anspruch 1 oder 2, bei der die Kameramittel eine CCD-Kamera umfassen.

## Revendications

1. Machine pour contrôler un récipient en verre, comprenant :
des moyens (10) pour supporter verticalement le récipient en verre (12) au niveau d'une station de contrôle,
une première source de lumière (14) pour diriger la lumière verticalement vers le haut à travers le fond du récipient en verre,
des moyens formant caméra (22) positionnés verticalement au-dessus de la surface d'étanchéité (28) du récipient en verre pour formation d'image de la surface d'étanchéité,
un séparateur de faisceau (18) positionné au-dessus de la surface d'étanchéité (28), et
une seconde source de lumière (26) pour diriger la lumière horizontalement vers ledit séparateur de faisceau (18) afin de rediriger la lumière dirigée horizontalement, verticalement vers le bas vers la surface d'étanchéité (28),
**caractérisée en ce que** :
la machine est apte à fonctionner pour contrôler la présence d'une protubérance en « morfil » (wire edge) (40) faisant saillie vers le haut à partir du bord interne d'un palier annulaire (27) défini dans le coin intérieur du trou (16) de surface d'étanchéité d'un récipient en verre (12) lorsqu'elle est positionnée de manière opérationnelle au niveau d'une station de contrôle,
les moyens formant caméra (22) comprennent un verre de champ (20) situé au-dessus de la surface d'étanchéité (28) du récipient en verre, le séparateur de faisceau (18) étant situé entre le verre de champ et la surface d'étanchéité, et
la machine est configurée pour diriger la lumière à partir de la première source de lumière (14) verticalement vers le haut à travers le fond du récipient, et simultanément pour diriger la lumière à partir de la seconde source de lumière (26) via le séparateur de faisceau (18), verticalement vers le bas vers la surface d'étanchéité (28),
moyennant quoi lors du fonctionnement de la machine, le trou apparaît brillant, la surface d'étanchéité apparaît grise, le palier annulaire apparaît noir et une protubérance en « morfil » (wire edge) apparaît grise.

2. Machine pour contrôler la présence d'un bord de fil métallique selon la revendication 1, dans laquelle ladite seconde source de lumière est un panneau de diodes électroluminescentes.

3. Machine pour contrôler la présence d'un bord de fil métallique selon la revendication 1 ou 2, dans laquelle lesdits moyens formant caméra comprennent une caméra CCD.
